# EUROPEAN PATENT SPECIFICATION

(11) **EP 4 144 076 B1**
(45) Date of publication and mention of the grant of the patent: **01.07.2026**
(21) Application number: 21796103.6
(22) Date of filing: 29.04.2021
(51) Int. Cl.: H04N 1/00, G06T 7/13

(54) **SYSTEMS AND METHODS FOR MANAGING DIGITAL NOTES**
SYSTEME UND VERFAHREN ZUR VERWALTUNG DIGITALER NOTIZEN
SYSTÈMES ET PROCÉDÉS POUR GÉRER DES NOTES NUMÉRIQUES

(30) Priority: 01.05.2020 US 202062704269 P
(43) Date of publication of application: 08.03.2023
(73) Proprietor: 3M Innovative Properties Company, Saint Paul, Minnesota 55133-3427 (US)
(72) Inventor: AXELSSON, Pontus, 111 22 Stockholm (SE); ANSMAN GIERTZ, Nicklas A., New York, New York 10012 (US); PERSSON, Roland, 111 22 Stockholm (SE); ÅKERLUND, Alf Linus, 11160 Stockholm (SE); JÄRLEBERG, Anders F., New York, New York 10012 (US); ROTSTEIN, Michael, 111 22 Stockholm (SE); KARLSSON, John E., New York, New York 10012 (US)
(74) Representative: Vossius & Partner Patentanwälte Rechtsanwälte mbB
(86) International application number: PCT/IB2021/053573
(87) International publication number: WO 2021/220213

(56) References cited:
- US-A1- 2014 297 646
- US-A1- 2017 155 790
- US-A1- 2018 129 363
- US-B2- 10 331 777
- US-B2- 8 380 040
- KHOLOPOV IVAN S.: "Bird's Eye View Transformation Technique in Photogrammetric Problem of Object Size Measuring at Low-altitude Photography", 1 January 2017 (2017-01-01), Paris, France, XP093138256, ISBN: 978-94-625-2406-4, Retrieved from the Internet <URL:https://www.atlantis-press.com/article/25885184.pdf> DOI: 10.2991/aime-17.2017.52
- WANG XIANG ET AL: "Geometric and Photometric Correction of Projected Rectangular Pictures", 1 April 2005 (2005-04-01), pages 1 - 7, XP093138504, Retrieved from the Internet <URL:https://www.researchgate.net/profile/Reinhard-Klette/publication/37986881_Geometric_Correction_of_Projected_Rectangular_Pictures/links/00b7d518b2c61663bf000000/Geometric-Correction-of-Projected-Rectangular-Pictures.pdf> [retrieved on 20240306]
- ZHANG: "A flexible new technique for camera calibration", IEEE TRANSACTIONS ON PATTERN ANALYSIS AND MACHINE INTELLIGENCE, vol. 22, no. 11, 1 November 2000 (2000-11-01), USA, pages 1330, XP055037019, ISSN: 0162-8828, DOI: 10.1109/34.888718

## Description

### BACKGROUND

Paper notes have been broadly used in recording, sharing, and communicating ideas and information. For example, during a collaboration session (e.g., brainstorming session), participants write down ideas on repositionable paper notes, whiteboard, or paper, and then share with one another. In addition, people commonly use notes throughout the day to memorialize information or content which the individual does not want to forget. As additional examples, people frequently use notes as reminders of actions or events to take in the future, such as to make a telephone call, revise a document or to fill out a time sheet.

Software programs currently exist which permit computer users to create a software-based note in a digital form and to utilize the digital note within a computing environment. For example, a computer user may create a digital note and "attach" the digital note to an electronic document a desktop or electronic workspace presented by the computing environment.

Kholopov, Ivan. (2017). Bird's Eye View Transformation Technique in Photogrammetric Problem of Object Size Measuring at Low-altitude Photography. 10.2991/aime-17.2017.52 discloses a solution of the photogrammetric problem of measuring the planar objects dimensions with projective distortions that are characteristic for low-altitude photography. It is shown that a bird's eye view transformation technique allows estimating the area occupied by planar objects with a relative error of up to 5 %.

### SUMMARY

A first method for managing notes includes receiving a plurality of digital notes, each of the digital notes including an image of handwritten content, assembling the plurality of digital notes into a single electronic document, sending the electronic document to an optical character recognition (OCR) service or application for using the OCR to convert the handwritten content into characters, receiving from the OCR service or application the electronic document with results of using the OCR, and electronically separating the plurality of digital notes from the electronic document and assigning the results of the OCR to the digital notes having the corresponding handwritten content.

A second method for managing notes includes displaying a digital note on an electronic display device, receiving a command to delete or remove the digital note, and displaying a digital representation and animation of the digital note being crumpled in response to the command.

A third method for managing notes includes receiving an image of a physical note taken from a non-zero angle, detecting corners of the physical note in the image, re-calculating the corners according to a projection matching a plurality of camera angles, computing a score for the corners based upon the re-calculating step at each of the camera angles, and selecting a projection angle for the corners based upon the computing step and, based upon an aspect ratio of the digital note at the selected projection angle, calculating a size for the digital note.

A fourth method for managing notes including receiving an image of a physical note, detecting edges of the physical note in the image, choosing a first segment in the edges, selecting a plurality of other segments in the edges relative to the first segment, assigning the first segment and the plurality of other segments to the edges, labeling the edges based upon the first segment and the plurality of other segments, and determining if the physical note in the image is curled or damaged based upon the labels.

### BRIEF DESCRIPTION OF THE DRAWINGS

FIG. 1A is a representation illustrating one example of a user capturing an image of a workspace with notes using an image capture device on a mobile device.
FIG. 1B is a block diagram illustrating one example of the mobile device.
FIG. 1C is a block diagram illustrating one example of a note management application executing on the mobile device.
FIG. 1D illustrates another embodiment of a note recognition system.
FIG. 1E illustrates another embodiment of a note management system.
FIG. 2 is flow chart of a method for using optical character recognition to manage conversion of notes to corresponding digital notes.
FIG. 3A is a flow chart of a crumple feature for digital notes.
FIG. 3B-3D are images showing wireframes of a 3D model in three sequential stages of crumpling.
FIGS. 3E-3G are images showing rendered views of a note being crumpled in each sequential stage corresponding with the 3D models shown in FIGS. 3B-3D.
FIG. 4A is a flow chart of a method to manage conversion of non-square notes, and damaged or curled notes to corresponding digital notes.
FIG. 4B illustrates an output of a projection search resulting from use of the scoring algorithm.
FIG. 4C is a capture image of notes taken at an angle.
FIG. 4D is the capture image of FIG. 4C but with the perspective transformed to appear as if the image were from the front not at an angle.
FIGS. 5-10 are images illustrating managing conversion of curled notes to corresponding digital notes.

### DETAILED DESCRIPTION

### Overview

The present disclosure describes techniques for creating and manipulating software notes representative of physical notes. For example, techniques are described for recognizing physical notes present within a physical environment, capturing information therefrom and creating corresponding digital representations of the physical notes, referred to herein as digital notes or software-based notes. Further, at least some aspects of the present disclosure are directed to techniques for managing multiple notes.

In general, notes can include physical notes and digital notes. Physical notes generally refer to objects with a general boundary and recognizable content. Physical notes can include the resulting objects after people write, draw, or enter via other type of inputs on the objects, for example, paper, white board, or other objects accepting the inputs. By way of examples, physical notes can include hand-written repositionable paper notes, paper, or film, white-board with drawings, posters, and signs. In some cases, physical notes can be generated using digital means, e.g., printing onto printable repositionable paper notes or printed document. In some cases, one object can include several notes. For example, several ideas can be written on a piece of poster paper or a white-board. Physical notes can be two-dimensional or three dimensional. Physical notes can have various shapes and sizes. For example, a physical note may be a 3 inches x 3 inches note; a physical note may be a 26 inches x 39 inches poster; and a physical note may be a triangular metal sign. In some cases, physical notes have known shapes and/or sizes. Digital notes generally refer to digital objects with information and/or ideas. Digital notes can be generated using digital inputs. Digital inputs can include, for example, keyboards, touch screens, digital cameras, digital recording devices, stylus, digital pens, or the like. In some cases, digital notes may be representative of physical notes.

### Note Management System

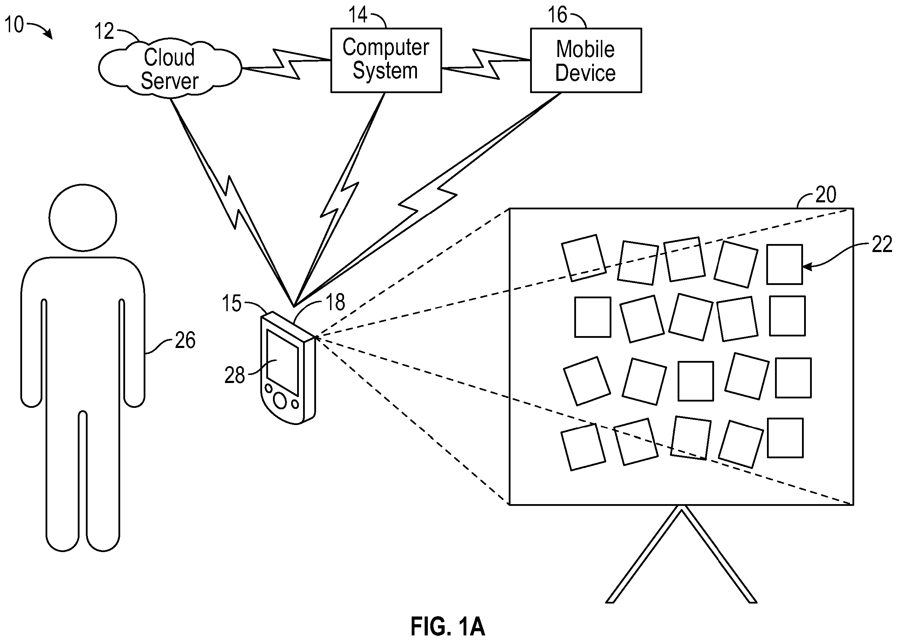

FIG. 1A illustrates an example of a note recognition environment 10. In the example of FIG. 1A, environment 10 includes a mobile device 15 to capture and recognize one of more notes 22 from a workspace 20. As described herein, mobile device provides an execution environment for one or more software applications that, as described, can efficiently capture and extract note content from a large number of physical notes, such as the collection of notes 22 from workspace 20. In this example, notes 22 may be the results of a collaborative brainstorming session having multiple participants. As described, mobile device 15 and the software executing thereon may perform a variety of note-related operations, including automated creation of digital notes representative of physical notes 22 of workspace 20.

In the example implementation, mobile device 15 includes, among other components, an image capture device 18 and a presentation device 28. In addition, although not shown in FIG. 1A, mobile device 15 may include one or more processors, microprocessors, internal memory and/or data storage and other electronic circuitry for executing software or firmware to provide the functionality described herein.

In general, image capture device 18 is a camera or other component configured to capture image data representative of workspace 20 and notes 22 positioned therein. In other words, the image data captures a visual representation of an environment, such as workspace 20, having a plurality of visual notes. Although discussed as a camera of mobile device 15, image capture device 18 may comprise other components capable of capturing image data, such as a video recorder, an infrared camera, a CCD (Charge Coupled Device) array, a laser scanner, or the like. Moreover, the captured image data can include at least one of an image, a video, a sequence of images (i.e., multiple images taken within a time period and/or with an order), a collection of images, or the like, and the term input image is used herein to refer to the various example types of image data.

Presentation device 28 may include, but not limited to, an electronically addressable display, such as a liquid crystal display (LCD) or other type of display device for use with mobile device 28. In some implementations, mobile device 15 generates the content to display on presentation device 28 for the notes in a variety of formats, for example, a list, grouped in rows and/or column, a flow diagram, or the like. Mobile device 15 may, in some cases, communicate display information for presentation by other devices, such as a tablet computer, a projector, an electronic billboard or other external device.

As described herein, mobile device 15, and the software executing thereon, provide a platform for creating and manipulating digital notes representative of physical notes 22. For example, in general, mobile device 15 is configured to process image data produced by image capture device 18 to detect and recognize at least one of physical notes 22 positioned within workspace 20. In some examples, the mobile device 15 is configured to recognize note(s) by determining the general boundary of the note(s). After a note is recognized, mobile device 15 extracts the content of at least one of the one or more notes, where the content is the visual information of note 22.

In some example implementations, mobile device 15 provides functionality by which user 26 is able to export the digital notes to other systems, such as cloud-based repositories (e.g., cloud server 12) or other computing devices (e.g., computer system 14 or mobile device 16).

In the example of FIG. 1A, mobile device 15 is illustrated as a mobile phone. However, in other examples, mobile device 15 may be a tablet computer, a personal digital assistant (PDA), a laptop computer, a media player, an e-book reader, a wearable computing device (e.g., a watch, eyewear, a glove), or any other type of mobile or non-mobile computing device suitable for performing the techniques described herein.

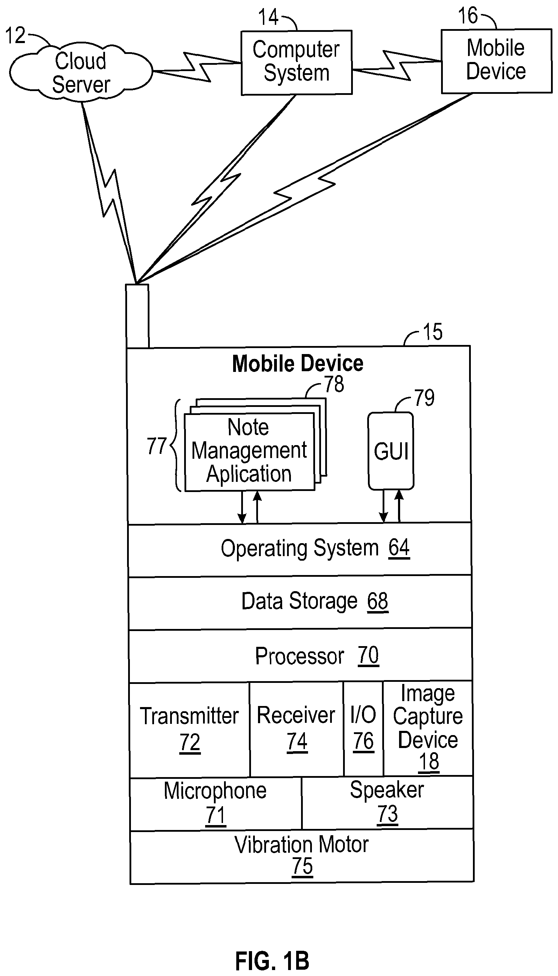

FIG. 1B illustrates a block diagram illustrating an example of a mobile device that operates in accordance with the techniques described herein. For purposes of example, the mobile device of FIG. 1B will be described with respect to mobile device 15 of FIG. 1A

In this example, mobile device 15 includes various hardware components that provide core functionality for operation of the device. For example, mobile device 15 includes one or more programmable processors 70 configured to operate according to executable instructions (i.e., program code), typically stored in a computer-readable medium or data storage 68 such as static, random-access memory (SRAM) device or Flash memory device. I/O 76 may include one or more devices, such as a keyboard, camera button, power button, volume button, home button, back button, menu button, or presentation device 28 as described in FIG. 1A. Transmitter 72 and receiver 74 provide wireless communication with other devices, such as cloud server 12, computer system 14, or other mobile device 16 as described in FIG. 1A, via a wireless communication interface as described in FIG. 1A, such as but not limited to high-frequency radio frequency (RF) signals. A microphone 71 converts audio information into corresponding electrical signals. A speaker 73 converts electrical signals into corresponding audio information. A vibration motor 75 is used to cause mobile device 15, or housing for it, to vibrate. Mobile device 15 may include additional discrete digital logic or analog circuitry not shown in FIG. 1B.

In general, operating system 64 executes on processor 70 and provides an operating environment for one or more user applications 77 (commonly referred to "apps"), including note management application 78. User applications 77 may, for example, comprise executable program code stored in computer-readable storage device (e.g., data storage 68) for execution by processor 70. As other examples, user applications 77 may comprise firmware or, in some examples, may be implemented in discrete logic.

In operation, mobile device 15 receives input image data and processes the input image data in accordance with the techniques described herein. For example, image capture device 18 may capture an input image of an environment having a plurality of notes, such as workspace 20 of FIG. 1A having of notes 22. As another example, mobile device 15 may receive image data from external sources, such as cloud server 15, computer system 14 or mobile device 16, via receiver 74. In general, mobile device 15 stores the image data in data storage 68 for access and processing by note management application 78 and/or other user applications 77.

As shown in FIG. 1B, user applications 77 may invoke kernel functions of operating system 64 to output a graphical user interface (GUI) 79 for presenting information to a user of mobile device. As further described below, note management application 78 may construct and control GUI 79 to provide an improved electronic environment for generating and manipulating corresponding digital notes representative of physical notes 22. For example, note management application 78 may construct GUI 79 to include mechanisms that allows user 26 to easily control events that are automatically triggered in response to capturing notes of certain characteristics. In addition, note management application 78 may construct GUI 79 to include mechanisms that allow user 26 to manage relationships between groups of the digital notes.

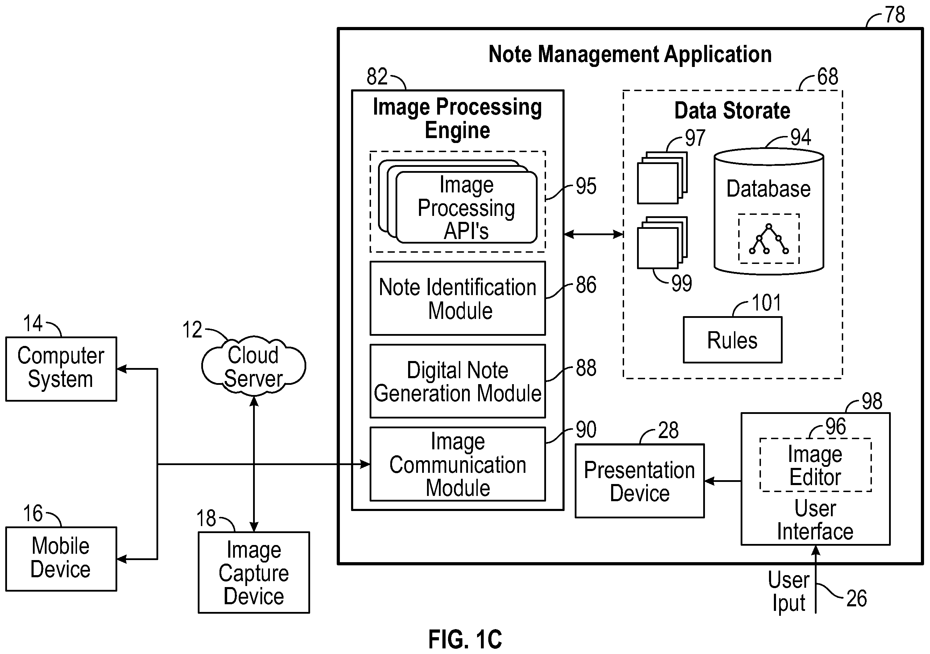

FIG. 1C is a block diagram illustrating one example implementation of note management application 78 that operates in accordance with the techniques described herein. Although described as a user application 77 executing on mobile device 15, the examples described herein may be implemented on any computing device, such as cloud server 12, computer system 14, or other mobile devices.

In this example, note management application 78 includes image processing engine 82 that provides image processing and object recognition functionality. Image processing engine 82 may include image communication module 90, note identification module 86 and digital note generation module 88. In addition, image processing engine 82 includes image processing Application Programming Interfaces (APIs) 95 that provide a library of image manipulation functions, e.g., image thresholding, masking, filtering, edge detection, and the like, for use by the other components of image processing engine 82.

In general, image data may be stored in data storage device 68. In this example, note management application 78 stores images 97 within data storage device 68. Each of images 97 may comprise pixel data for environments having a plurality of physical images, such as workspace 20 of FIG. 1A.

As described herein, note identification module 86 processes images 97 and identifies (i.e., recognizes) the plurality of physical notes in the images. Digital note generation module 88 generates digital notes 99 corresponding to the physical notes recognized within the images 97. For example, each of digital notes 99 corresponds to one of the physical notes identified in an input image 97. During this process, digital note generation module 88 may update database 94 to include a record of the digital note, and may store within the database information (e.g., content) extracted from the input image within boundaries determined for the physical note as detected by note identification module 86. Moreover, digital note generation module 88 may store within database 94 metadata associating the digital notes into one or more groups of digital notes.

Further, note management application 78 may be configured, e.g., by user input 26, to specify rules 101 that trigger actions in response to detection of physical notes having certain characteristics. For example, user interface 98 may, based on the user input, map action to specific characteristics of notes. Note management application 78 may output user interface 98 by which the user is able to specify rules having actions, such as a note grouping action, or an action related to another software application executing on the mobile device, such as an action related to a calendaring application. For each rule, user interface 98 allows the user to define criteria for triggering the actions. During this configuration process, user interface 98 may prompt the user to capture image data representative of an example note for triggering an action and process the image data to extract characteristics, such as color or content. User interface 98 may then present the determined criteria to the user to aid in defining corresponding rules for the example note.

Image communication module 90 controls communication of image data between mobile device 15 and external devices, such as cloud server 12, computer system 14, mobile device 16, or image capture device 18. In some examples, image communication module 90 may, for example, allow a user to communicate processed or unprocessed images 97 of environments and/or digital notes and associated information extracted therefrom including metadata from database 68. In some examples, image communication module 90 exports this data to a zip file that may be communicated by FTP, HTTP, email, Bluetooth or other mechanism.

In the example of FIG. 1C, note management application 78 includes user interface 98 that constructs and controls GUI 79 (FIG. 1B). As described below, user interface 98 may, in some examples, output for display an input image 97 overlaid with the plurality of digital notes 99, where each of the digital notes is overlaid in place of a corresponding physical note. In addition, user interface 98 may display a group of digital notes 99 that has been designated by the user. This group of digital notes 99 may be, for example, a subset of the digital notes recognized in a particular input image 97. User interface 98 may display this designated group (set) of the digital notes on a second portion of GUI 79 and allow user 26 to easily add or remove digital notes 99 from the designated group.

In some example implementations, user interface 98 provides an image editor 96 that allows a user to edit the overlay image and/or the digital notes. In another example, digital note generation module 88 may include a process or processes that enhances the extracted information from the input image.

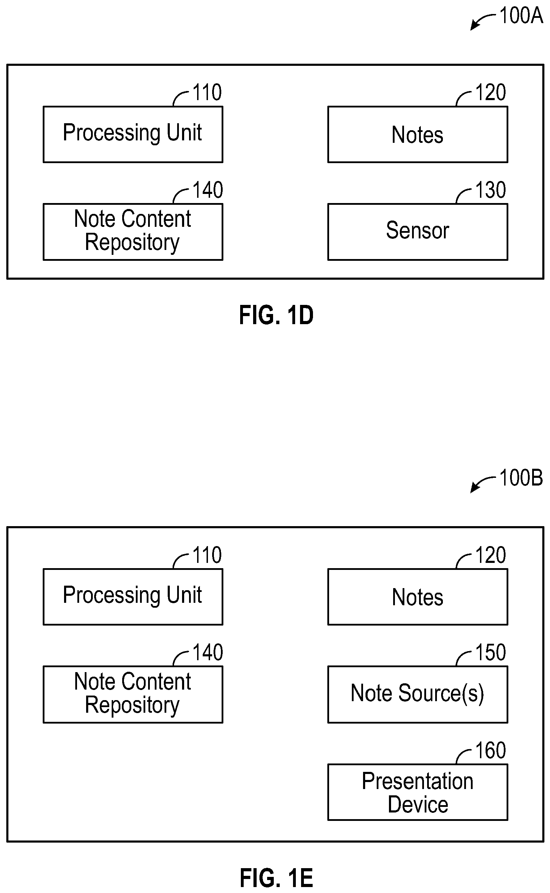

FIG. 1D illustrates another example embodiment of a note recognition system 100A. The system 100A can include a processing unit 110, one or more notes 120, a sensor 130, and note content repository 140. The processing unit 110 can include one or more processors, microprocessors, computers, servers, and other computing devices. The sensor 130, for example, an image sensor, is configured to capture a visual representation of a scene having the one or more notes 120. The sensor 130 can include at least one of a camera, a video recorder, an infrared camera, a CCD (Charge Coupled Device) array, a scanner, or the like. The visual representation can include at least one of an image, a video, a sequence of images (i.e., multiple images taken within a time period and/or with an order), a collection of images, or the like. The processing unit 110 is coupled to the sensor 130 and configured to receive the visual representation. In some cases, the processing unit 110 is electronically coupled to the sensor 130. The processing unit 110 is configured to recognize at least one of the one or more notes 120 from the visual representation. In some embodiments, the processing unit 110 is configured to recognize note(s) by determining the general boundary of the note(s). After a note is recognized, the processing unit 110 extracts the content of the note. In some cases, the processing unit 110 is configured to recognize and extract the content of more than one note from a visual representation of a scene having those notes.

In some cases, the processing unit 110 can execute software or firmware stored in non-transitory computer-readable medium to implement various processes (e.g., recognize notes, extract notes, etc.) for the system 100A. The note content repository 140 may run on a single computer, a server, a storage device, a cloud server, or the like. In some other cases, the note content repository 140 may run on a series of networked computers, servers, or devices. In some implementations, the note content repository 140 includes tiers of data storage devices including local, regional, and central. The notes 120 can include physical notes arranged orderly or randomly in a collaboration space and the sensor 130 generates a visual representation of the notes 120 in the collaboration space.

In some implementations, the note recognition system 100A can include a presentation device (not shown in FIG. 1D) to show to the user which notes are recognized and/or which notes' content have been extracted. Further, the note recognition system 100A can present the extracted content via the presentation device. In some embodiments, the processing unit 110 can authenticate a note before extracting the content of the note. If the note is authenticated, the content will be extracted and stored in the note content repository 140.

FIG. 1E illustrates an embodiment of a note management system 100B. In this embodiment, the note management system 100B includes processing unit 110, one or more notes 120, one or more note sources 150, and a note content repository 140. In some cases, the system 100B includes a presentation device 160. The processing unit 110, the notes 120, and the note content repository 140 are similar to the components for the note recognition system 100A as illustrated in FIG. 1A. The note sources 150 can include sources to provide content of physical notes, such as a visual representation of a scene having one or more notes, and sources to provide content of digital notes, such as a data stream entered from a keyboard. In some embodiments, the note management system 100B includes a first source and a second source, and the first source is a visual representation of a scene having one or more notes 120. The first source and the second source are produced by different devices. The second source includes at least one of a text stream, an image, a video, a file, and a data entry. The processing unit 110 recognizes at least one of the notes from the first source and extracts the content of the note, as discussed in the note recognition system 100A. In some cases, the processing unit 110 labels the note with a category. The processing unit 110 can label a note based on its specific shape, color, content, and/or other information of the note. For example, each group of note can have a different color (e.g., red, green, yellow, etc.).

In some embodiments, the note management system 100B can include one or more presentation devices 160 to show the content of the notes 120 to the user. The presentation device 160 can include, but not limited to, an electronically addressable display, such as a liquid crystal display (LCD), a tablet computer, a projector, an electronic billboard, a cellular phone, a laptop, or the like. In some implementations, the processing unit 110 generates the content to display on the presentation device 160 for the notes in a variety of formats, for example, a list, grouped in rows and/or column, a flow diagram, or the like.

Various components of the note recognition system and note management system, such as processing unit, image sensor, and note content repository, can communicate via a communication interface. The communication interface includes, but not limited to, any wired or wireless short-range and long-range communication interfaces. The short-range communication interfaces may be, for example, local area network (LAN), interfaces conforming to a known communications standard, such as Bluetooth standard, IEEE 802 standards (e.g., IEEE 802.11), a ZigBee or similar specification, such as those based on the IEEE 802.15.4 standard, or other public or proprietary wireless protocol. The long-range communication interfaces may be, for example, wide area network (WAN), cellular network interfaces, satellite communication interfaces, etc. The communication interface may be either within a private computer network, such as intranet, or on a public computer network, such as the internet.

### Optical Character Recognition (OCR) for Notes

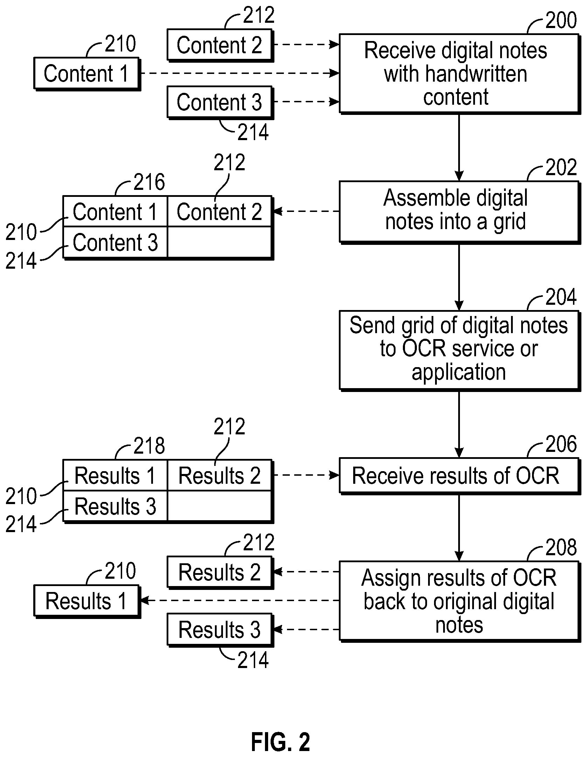

FIG. 2 is flow chart of a method for using optical character recognition to manage conversion of notes to corresponding digital notes. This method can be implemented in software or firmware for execution by processor 70 in mobile device 15. This method includes receiving digital notes with handwritten content (step 200), for example digital note 210 with content 1, digital note 212 with content 2, and digital note 214 with content 3. The handwritten content can include, for example, characters, text, symbols, icons, or emojis. The handwritten content can include content directly handwritten, for example on a paper note or electronically on a digital note, or content that appears handwritten. Only three digital notes are shown for illustrative purposes; the method can accommodate a plurality of more digital notes.

The digital notes are assembled into a grid or other format in a single electronic document or image (step 202). For example, a grid 216 includes the content from digital notes 210, 212, and 214. The grid of digital notes is sent to an OCR service or application (step 204), which can include electronically transmitting the grid of digital notes via network to the OCR service or application. The results of the OCR are received (step 206). The results can include, for example, a grid 218 in an electronic document including results 1 for digital note 210, results 2 for digital note 212, and results 3 for digital note 214. The results of OCR include conversion of the content in the received digital notes into corresponding characters, for example text, symbols, icons, or emojis.

The method assigns results of the OCR back to the original digital notes (step 208). For example, results 1 are assigned to digital note 210, results 2 are assigned to digital note 212, and results 3 are assigned to digital note 214. Assigning the results can include, for example, displaying the digital notes with the results replacing the handwritten content or displaying both the results and the original handwritten content.

An OCR service or application typically charges a fee for each OCR request for conversion of content into correspond characters. By assembling a plurality of digital notes into a single electronic document or image, the number of requests for OCR can be reduced for digital notes, resulting a cost savings and more efficient use of OCR services or applications.

### Note Crumple Feature

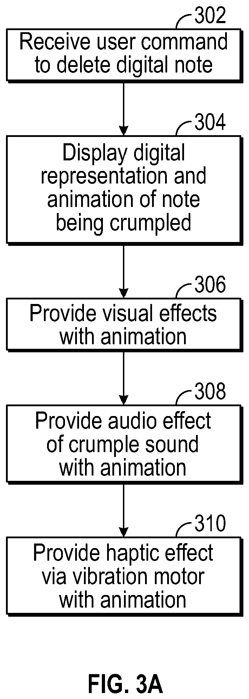

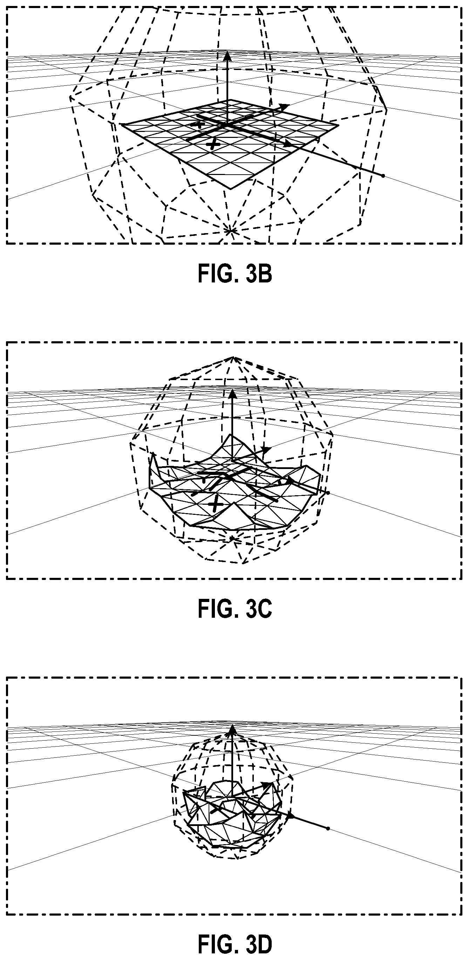

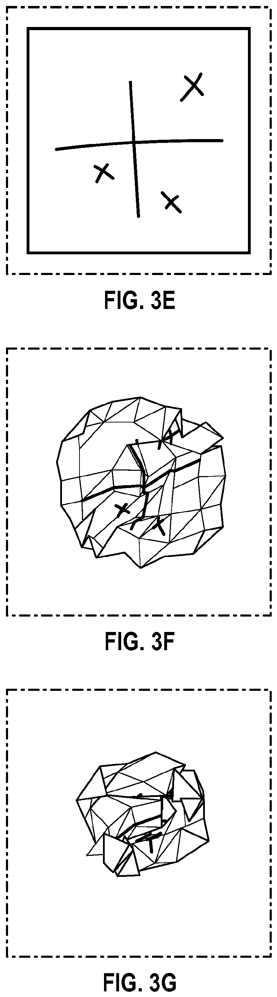

FIG. 3A is a flow chart of a crumple feature for digital notes. This method can be implemented in software or firmware for execution by processor 70 in mobile device 15.

The method receives a user command to delete or remove, or other instruction, a digital note displayed on a display screen, for example GUI 79 in mobile device 15 (step 302). The method displays a digital representation and animation of the digital note being crumpled, showing the digital note becoming wrinkled or creased to simulate the crumpling of a physical note (step 304). The digital representation and animation can include, for example, one or more of the following during at least part of the animation: visual effects (step 306); an audio effect (step 308); and a haptic effect (step 310). After the animation, the crumpled digital note can optionally be removed from GUI 79 or other display screen.

The visual effects for step 306 can include, for example, lighting, texture, shading, and surface effects. The audio effect for step 308 can include, for example, the sound of a physical note being crumpled and played on speaker 73, or another type of sound played on speaker 73 during at least part of the animation. The haptic effect can include, for example, using vibration motor 75 to cause mobile device 15 to vibrate in order to model the tactile experience of feeling the crumpling a physical note in the user's hand. The vibration motor 75 can be triggered with a specific pattern to model the tactile experience. One exemplary pattern is a combination of continuous and transient haptic events arranged to synchronize with the sound and the animation: a brief (100 milliseconds) continuous event and seven transients with fine-tuned intensity levels carefully spaced out over 300 milliseconds.

**Table 1 provides steps of an algorithm to implement the method of FIG. 3A.**

| Table 1 | |
|---|---|
| 1 | A planar object representing the note is set up as a cloth simulation (using 7x7 segments to look more like paper rather than fabric). |
| 2 | A hollow, invisible sphere surrounding the note object is set up. |
| 3 | A camera is placed above the note and sphere, capturing the animation from the top down. The "camera" represents the user looking at the display screen. |
| 4 | The sphere object is scaled down during the animation; both the sphere object and the note object have collider tags applied, allowing the sphere object to "crumple" the note object as it scales down. |
| 5 | The simulation is converted into a keyframe animation, allowing the note to crumple without the sphere, which can be removed. |
| 6 | Images of the original (analog or digital note) are applied to the note object, optionally along with lighting, texture, shading and surface effects as the animation is played in the application. The application optionally also applies both audio (recorded sound of a paper note crumpling) and vibration (triggering phone haptics to model the feeling of crumpling in a user's hand) to create an engaging multi-modal experience. |

As indicated in the steps of the algorithm in Table 1, FIG. 3B-3D are images showing wireframes of a 3D model in three sequential stages of crumpling an exemplary digital note, and FIGS. 3E-3G are images showing rendered views of the exemplary digital note being crumpled in each sequential stage corresponding with the 3D models shown in FIGS. 3B-3D.

### Non-Square Notes

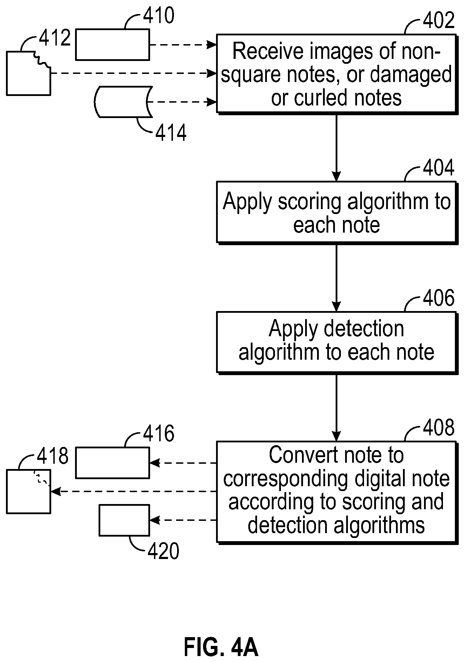

FIG. 4A is a flow chart of a method to manage conversion of non-square notes, and damaged or curled notes to corresponding digital notes. This method can be implemented in software or firmware for execution by processor 70 in mobile device 15.

The method includes receiving images of non-square notes, or damaged or curled notes (step 402), for example non-square note 410, damaged note 412 (with a torn, missing, or folded corner), and curled note 414. The method applies a scoring algorithm to the received images of notes (step 404) and a detection algorithm to the received images of notes (step 406). Using the scoring and detection algorithms, the method converts the received notes into the corresponding digital notes (step 408), for example non-square digital note 416, digital note 418 without a missing corner, and digital note 420 without curl.

The method of FIG. 4A, can be used with a wide range of shapes and sizes of paper products, including repositionable notes. This method can detect products such as rectangular (non-square) and non-rectangular paper notes as well as non-paper products such as dry erase boards. Some examples of these products are 5x8", 2x2" and 8x6" repositionable notes.

To be able to determine the size of a physical note in a captured image, an algorithm can be used to implement the method of FIG. 4A. After executing the algorithm, the method has a collection of "notes," roughly rectangular shapes defined by four corners. These rectangles will vary in shape and size, even if all the physical notes are the same size: in the capture image, their shapes will be distorted by perspective, and the corner positions reported by the algorithm might not be 100% accurate.

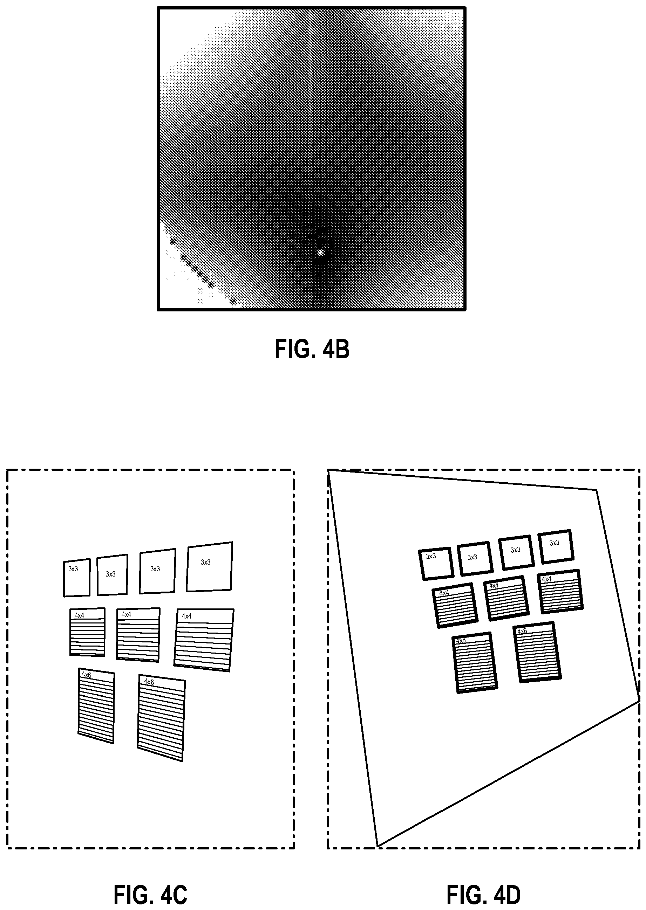

To be able to correctly determine which physical sizes that the digital notes correspond to, the digital notes are perspective corrected, that is the positions of the corners are re-calculated so that they appear as if they were captured straight from the front (not at a non-zero angle from the front). This is done using the following search:
1. For every camera angle along the X and Y axes, from a minimum to a maximum, the note corners are re-calculated according to a projection matching the camera angle, and a score is computed. (Example: starting at -55 degrees and ending at 55 degrees, re-calculate note corners at every 2nd degree step, that is start at -55, then -53, then -51, etc.), see FIG. 4B.
2. The score is designed to maximize "squareness" in the digital notes, that is that the corner angles are as close to 90 degrees as possible, that the length of the vertical edges are as similar as possible, and that the horizontal edges are as similar as possible.

FIG. 4B shows an output from the projection search. Each point is the result of the scoring for a combination of X and Y values. Darker means a better score. The lighter colored point within the search space is the one with the best score.

FIG. 4C is a capture image of notes taken at an angle (non-zero angle from a front view). FIG. 4D is the capture image of FIG. 4C but with the perspective transformed to appear as if the image were from the front not at an angle.

The projection angle with the best score is chosen for the next step, which includes finding the combination of note sizes that best corresponds to the aspect ratios of the individual notes, and their relative sizes as follows:
1. For each note, calculate the closest note sizes, based on the aspect ratio. The closest size classes are the ones that have similar aspect ratios to the digital note. For example, a note with aspect ratio 0.98 would be very close to all square note sizes, which have aspect ratio 1. A note that has a 1.28 aspect ratio would be close enough to both 8x6 (which has aspect ratio 1.33) and 6x4 (which has aspect ratio 1.5). For each of the size classes, calculate a pixels per inch value, that is how large a physical area each pixel would represent if the note size is the correct one.
2. For each of the calculated pixel per inch values, calculate the best matching size class for each note, and compute a total error, based on the differences in area and aspect ratio between the physical note and the calculated values for the digital note.
3. Select the classification with the smallest total error. The selected classification can be assigned to the note in order to generate a corresponding digital note having a size based upon the selected classification.

### Damaged and Curled Notes

Damaged notes (i.e., notes with folded corners or with tears in them), and curled notes (i.e., notes that are not flush against the surface that they are attached to) can cause a sub-optimal detection result where the note is either missed completely or where the shape of the note is incorrect. The method of FIG. 4A, using the detection algorithm of step 406, can also be used to process these damaged or curled notes in order to accurately correct for these problems, allowing the software algorithm to find the precise shape of the note.

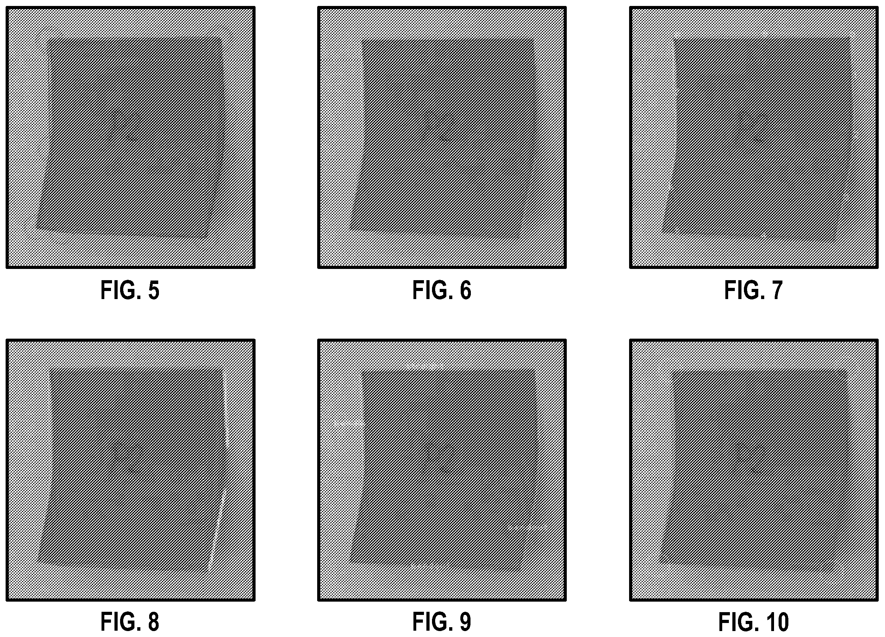

The detection algorithm finds out if notes are curled by examining additional metadata that is generated for the edges in the digital note. As the supported note sizes are rectangular, the end result includes the positions of the four corners of the note. But in the detection algorithm itself, more detailed contours are used, that is contours with more than four edges (see FIG. 5).

In the detailed contour, the longest segment is first chosen as the starting point. Given this segment, three more segments are determined to be "major edges", based on their length (e.g., at least 25% of the longest segment) and relative positions to the longest segment (see FIG. 6). The remaining segments in the detailed contour are assigned to the four edges, based on similarity of angles to the major edges (see FIG. 7).

The algorithm has now detected four edges, each edge consisting of one or more segments:
1. If the edge consists of just one segment, it is labeled as a straight edge.
2. If the edge has more than one segment, the segment is labeled either as straight (if the segments form a more or less straight line), or bend-in or bend-out with an attached curl factor, meaning a value indicating how curled the edge is. An edge is determined to be curled or straight by summing up the angles between the segments that make up the edge. Curl is only recorded as a binary value, i.e. a note either has curl or it does not. The fact that a note is curled is then used as a hint that its size and shape might be less exact than those of a non-curled note. The curl factor can be based, for example, on the summation of the angles between the segments that make up the edge.

If two opposite edges of the note are bend-in and bend-out respectively, the note is a curled note, and the note candidate is marked up with this information (see FIG. 9).

This algorithm can also process damaged notes, for example a note with a missing piece, by examining the edges of the note in the same or similar manner to find a corresponding size digital note without the missing piece.

FIGS. 5-10 are images illustrating managing conversion of curled notes to corresponding digital notes: FIG. 5 - note with input contour; FIG. 6 - major edges; FIG. 7 - assign segments; FIG. 8 - edge ends; FIG. 9 - classify edges; and FIG. 10 - final note corner points.

## Claims

1. A method for managing notes, comprising steps of executed by a processor:
receiving an image of a physical note taken from a non-zero angle;
detecting corners of the physical note in the image wherein at least one corner is torn, missing, or folded, or wherein the note is curled;
re-calculating the corners according to a plurality of projection angles matching a plurality of camera angles;
computing a score for the corners based upon the re-calculating step at each of the camera angles; and
selecting a projection angle for the corners based upon the computing step and, based upon an aspect ratio of the digital note at the selected projection angle, calculating a size for the digital note.

2. The method of claim 1, wherein the re-calculating step comprises using a maximum camera angle and a minimum camera angle.

3. The method of claim 1, wherein the re-calculating step comprises re-calculating the corners at increments between the plurality of camera angles.

4. The method of claim 1, wherein the calculating step comprises:
calculating a pixels per inch value for the selected size; and
determining a difference between the calculated pixels per inch value and an area of a physical note corresponding with the selected size.

5. A computer-readable medium embodying instructions to perform a computerized method comprising:
receiving an image of a physical note taken from a non-zero angle;
detecting corners of the physical note in the image, wherein at least one corner is torn, missing, or folded, or wherein the note is curled;
re-calculating the corners according to a plurality of projection angles matching a plurality of camera angles;
computing a score for the corners based upon the re-calculating step at each of the camera angles; and
selecting a projection angle for the corners based upon the computing step and, based upon an aspect ratio of the digital note at the selected projection angle, calculating a size for the digital note.

6. The computer-readable medium of claim 5, wherein the re-calculating step comprises using a maximum camera angle and a minimum camera angle.

7. The computer-readable medium of claim 5, wherein the re-calculating step comprises re-calculating the corners at increments between the plurality of camera angles.

8. The computer-readable medium of claim 5, wherein the calculating step comprises:
calculating a pixels per inch value for the selected size; and
determining a difference between the calculated pixels per inch value and an area of a physical note corresponding with the selected size.

9. A device embodying instructions to perform a computerized method comprising:
receiving an image of a physical note taken from a non-zero angle;
detecting corners of the physical note in the image, wherein at least one corner is torn, missing, or folded, or wherein the note is curled;
re-calculating the corners according to a plurality of projection angles matching a plurality of camera angles;
computing a score for the corners based upon the re-calculating step at each of the camera angles; and
selecting a projection angle for the corners based upon the computing step and, based upon an aspect ratio of the digital note at the selected projection angle, calculating a size for the digital note.

10. The device of claim 9, wherein the re-calculating step comprises using a maximum camera angle and a minimum camera angle.

11. The device of claim 9, wherein the re-calculating step comprises re-calculating the corners at increments between the plurality of camera angles.

12. The device of claim 9, wherein the calculating step comprises:
calculating a pixels per inch value for the selected size; and
determining a difference between the calculated pixels per inch value and an area of a physical note corresponding with the selected size.

## Patentansprüche

1. Ein Verfahren zum Verwalten von Notizen, aufweisend Schritte, die durch einen Prozessor ausgeführt werden:
Empfangen eines Bilds einer physischen Notiz, das aus einem Winkel ungleich null aufgenommen wurde;
Erkennen von Ecken der physischen Notiz in dem Bild, wobei mindestens eine Ecke eingerissen, fehlend oder gefaltet ist, oder wobei die Notiz gekrümmt ist;
Neuberechnen der Ecken gemäß einer Mehrzahl von Projektionswinkeln, die einer Mehrzahl von Kamerawinkeln entsprechen;
Berechnen einer Bewertung für die Ecken basierend auf dem Neuberechnungsschritt bei jedem der Kamerawinkel; und
Auswählen eines Projektionswinkels für die Ecken basierend auf dem Rechenschritt und, basierend auf einem Seitenverhältnis der digitalen Notiz bei dem ausgewählten Projektionswinkel, Berechnen einer Größe für die digitale Notiz.

2. Das Verfahren nach Anspruch 1, wobei der Neuberechnungsschritt das Verwenden eines maximalen Kamerawinkels und eines minimalen Kamerawinkels aufweist.

3. Das Verfahren nach Anspruch 1, wobei der Neuberechnungsschritt das Neuberechnen der Ecken in Inkrementen zwischen der Mehrzahl von Kamerawinkeln aufweist.

4. Das Verfahren nach Anspruch 1, wobei der Berechnungsschritt aufweist:
Berechnen eines Pixel-pro-Zoll-Werts für die ausgewählte Größe; und
Bestimmen einer Differenz zwischen dem berechneten Pixel-pro-Zoll-Wert und einem Bereich einer physischen Notiz, der mit der ausgewählten Größe korrespondiert.

5. Ein computerlesbares Medium, das Anweisungen verkörpert, um ein computergestütztes Verfahren durchzuführen, aufweisend:
Empfangen eines Bilds einer physischen Notiz, das aus einem Winkel ungleich null aufgenommen wurde;
Erkennen von Ecken der physischen Notiz in dem Bild, wobei mindestens eine Ecke eingerissen, fehlend oder gefaltet ist, oder wobei die Notiz gekrümmt ist;
Neuberechnen der Ecken gemäß einer Mehrzahl von Projektionswinkeln, die einer Mehrzahl von Kamerawinkeln entsprechen;
Berechnen einer Bewertung für die Ecken basierend auf dem Neuberechnungsschritt bei jedem der Kamerawinkel; und
Auswählen eines Projektionswinkels für die Ecken basierend auf dem Rechenschritt und, basierend auf einem Seitenverhältnis der digitalen Notiz bei dem ausgewählten Projektionswinkel, Berechnen einer Größe für die digitale Notiz.

6. Das computerlesbare Medium nach Anspruch 5, wobei der Neuberechnungsschritt das Verwenden eines maximalen Kamerawinkels und eines minimalen Kamerawinkels aufweist.

7. Das computerlesbare Medium nach Anspruch 5, wobei der Neuberechnungsschritt das Neuberechnen der Ecken in Inkrementen zwischen der Mehrzahl von Kamerawinkeln aufweist.

8. Das computerlesbare Medium nach Anspruch 5, wobei der Berechnungsschritt aufweist: Berechnen eines Pixel-pro-Zoll-Werts für die ausgewählte Größe; und
Bestimmen einer Differenz zwischen dem berechneten Pixel-pro-Zoll-Wert und einem Bereich einer physischen Notiz, der mit der ausgewählten Größe korrespondiert.

9. Eine Vorrichtung, die Anweisungen verkörpert, um ein computergestütztes Verfahren durchzuführen, aufweisend: Empfangen eines Bilds einer physischen Notiz, das aus einem Winkel ungleich null aufgenommen wurde;
Erkennen von Ecken der physischen Notiz in dem Bild, wobei mindestens eine Ecke eingerissen, fehlend oder gefaltet ist, oder wobei die Notiz gekrümmt ist;
Neuberechnen der Ecken gemäß einer Mehrzahl von Projektionswinkeln, die einer Mehrzahl von Kamerawinkeln entsprechen;
Berechnen einer Bewertung für die Ecken basierend auf dem Neuberechnungsschritt bei jedem der Kamerawinkel; und
Auswählen eines Projektionswinkels für die Ecken basierend auf dem Rechenschritt und, basierend auf einem Seitenverhältnis der digitalen Notiz bei dem ausgewählten Projektionswinkel, Berechnen einer Größe für die digitale Notiz.

10. Die Vorrichtung nach Anspruch 9, wobei der Neuberechnungsschritt das Verwenden eines maximalen Kamerawinkels und eines minimalen Kamerawinkels aufweist.

11. Die Vorrichtung nach Anspruch 9, wobei der Neuberechnungsschritt das Neuberechnen der Ecken in Inkrementen zwischen der Mehrzahl von Kamerawinkeln aufweist.

12. Die Vorrichtung nach Anspruch 9, wobei der Berechnungsschritt aufweist:
Berechnen eines Pixel-pro-Zoll-Werts für die ausgewählte Größe; und
Bestimmen einer Differenz zwischen dem berechneten Pixel-pro-Zoll-Wert und einem Bereich einer physischen Notiz, der mit der ausgewählten Größe korrespondiert.

## Revendications

1. Procédé pour la gestion de notes, comprenant des étapes exécutées par un processeur consistant à :
recevoir une image d'une note physique prise à partir d'un angle non nul ;
détecter des coins de la note physique dans l'image dans lequel au moins un coin est déchiré, manquant, ou plié, ou dans lequel la note est gondolée ;
recalculer les angles selon une pluralité d'angles de projection correspondant à une pluralité d'angles de caméra ;
calculer un score pour les coins sur la base de l'étape de recalcul à chacun des angles de caméra ; et
sélectionner un angle de projection pour les coins sur la base de l'étape de calcul et, sur la base d'un rapport d'aspect de la note numérique à l'angle de projection sélectionné, calculer une taille pour la note numérique.

2. Procédé selon la revendication 1, dans lequel l'étape de recalcul comprend l'utilisation d'un angle de caméra maximal et d'un angle de caméra minimal.

3. Procédé selon la revendication 1, dans lequel l'étape de recalcul comprend le recalcul des coins par incréments entre la pluralité d'angles de caméra.

4. Procédé selon la revendication 1, dans lequel l'étape de calcul comprend :
le calcul d'une valeur de pixels par pouce pour la taille sélectionnée ; et
la détermination d'une différence entre la valeur de pixels par pouce calculée et une zone d'une note physique correspondant à la taille sélectionnée.

5. Support lisible par ordinateur contenant des instructions pour réaliser un procédé informatisé comprenant :
la réception d'une image d'une note physique prise à partir d'un angle non nul ;
la détection de coins de la note physique dans l'image, dans lequel au moins un coin est déchiré, manquant, ou plié, ou dans lequel la note est gondolée ;
le recalcul des angles selon une pluralité d'angles de projection correspondant à une pluralité d'angles de caméra ;
le calcul d'un score pour les coins sur la base de l'étape de recalcul à chacun des angles de caméra ; et
la sélection d'un angle de projection pour les coins sur la base de l'étape de calcul et, sur la base d'un rapport d'aspect de la note numérique à l'angle de projection sélectionné, le calcul d'une taille pour la note numérique.

6. Support lisible par ordinateur selon la revendication 5, dans lequel l'étape de recalcul comprend l'utilisation d'un angle de caméra maximal et d'un angle de caméra minimal.

7. Support lisible par ordinateur selon la revendication 5, dans lequel l'étape de recalcul comprend le recalcul des coins par incréments entre la pluralité d'angles de caméra.

8. Support lisible par ordinateur selon la revendication 5, dans lequel l'étape de calcul comprend :
le calcul d'une valeur de pixels par pouce pour la taille sélectionnée ; et
la détermination d'une différence entre la valeur de pixels par pouce calculée et une zone d'une note physique correspondant à la taille sélectionnée.

9. Dispositif contenant des instructions pour réaliser un procédé informatisé comprenant :
la réception d'une image d'une note physique prise à partir d'un angle non nul ;
la détection de coins de la note physique dans l'image, dans lequel au moins un coin est déchiré, manquant, ou plié, ou dans lequel la note est gondolée ;
le recalcul des angles selon une pluralité d'angles de projection correspondant à une pluralité d'angles de caméra ;
le calcul d'un score pour les coins sur la base de l'étape de recalcul à chacun des angles de caméra ; et
la sélection d'un angle de projection pour les coins sur la base de l'étape de calcul et, sur la base d'un rapport d'aspect de la note numérique à l'angle de projection sélectionné, le calcul d'une taille pour la note numérique.

10. Dispositif selon la revendication 9, dans lequel l'étape de recalcul comprend l'utilisation d'un angle de caméra maximal et d'un angle de caméra minimal.

11. Dispositif selon la revendication 9, dans lequel l'étape de recalcul comprend le recalcul des coins par incréments entre la pluralité d'angles de caméra.

12. Dispositif selon la revendication 9, dans lequel l'étape de calcul comprend :
le calcul d'une valeur de pixels par pouce pour la taille sélectionnée ; et
la détermination d'une différence entre la valeur de pixels par pouce calculée et une zone d'une note physique correspondant à la taille sélectionnée.
